# FASCICULE DE BREVET EUROPEEN

(11) **EP 4 347 391 B1**
(45) Date de publication et mention de la délivrance du brevet: **17.09.2025**
(21) Numéro de dépôt: 22731748.4
(22) Date de dépôt: 23.05.2022
(51) Int. Cl.: B64C 11/38, B64C 11/44, F01D 7/00

(54) **CALAGE DE PAS ÉLECTROHYDRAULIQUE À POMPE RÉVERSIBLE**
ELEKTROHYDRAULISCHE BLATTVERSTELLUNG MIT UMKEHRBARER PUMPE
ELECTROHYDRAULIC PITCH SETTING WITH REVERSIBLE PUMP

(30) Priorité: 28.05.2021 FR 2105564
(43) Date de publication de la demande: 10.04.2024
(73) Titulaire: SAFRAN AIRCRAFT ENGINES, 75015 Paris (FR)
(72) Inventeur: DE WERGIFOSSE, Huguette, 77550 MOISSY-CRAMAYEL (FR); FRANTZ, Caroline Marie, 77550 MOISSY-CRAMAYEL (FR)
(74) Mandataire: Regimbeau
(86) Numéro de dépôt international: PCT/FR2022/050972
(87) Numéro de publication internationale: WO 2022/248800

(56) Documents cités:
- EP-A1- 1 306 558
- CH-A- 514 790
- FR-A- 970 185
- US-A1- 2014 193 261
- US-A1- 2018 128 289

## Description

### DOMAINE TECHNIQUE GENERAL

L'invention concerne le domaine des turbomachines comprenant une hélice ou une soufflante à calage variable. Plus précisément, l'invention porte sur un système d'actionnement du pas d'une hélice ou d'une soufflante d'une telle turbomachine.

### ETAT DE L'ART

Différentes architectures de turbomachine ont recours à une hélice (turbopropulseur, open rotor) ou une soufflante (turboréacteur) à calage variable. Cette variabilité permet à la turbomachine de s'adapter aux conditions de vol variables en maintenant un angle d'incidence de l'air favorable sur les pales. La variabilité du calage est particulièrement nécessaire pour les rotors ayant un faible taux de compression, comme les hélices de turbopropulseurs et les soufflantes de turbomachines ayant un taux de dilution (rapport entre le débit du flux secondaire (froid) et le débit du flux primaire (qui traverse le corps primaire)) élevé.

Des mécanismes de changement de pas multiples ont été imaginés pour faire varier le calage des pales d'une hélice ou d'une soufflante. Ces mécanismes comportent généralement une mise en rotation de la pale autour de son axe principal par l'intermédiaire d'une cinématique, par exemple un ensemble bielle - excentrique actionnée par un vérin. Le vérin est alimenté en fluide hydraulique (par exemple de l'huile) en provenance d'un groupe de lubrification de la turbomachine. La variation de la pression de fluide hydraulique délivrée ainsi que la distribution du fluide dans l'une ou l'autre des chambres du vérin permettent de faire varier le pas des pales. Afin de transférer l'alimentation en fluide hydraulique du mécanisme de changement de pas d'un repère fixe (groupe de lubrification) de la turbomachine à un repère tournant (de la soufflante), on utilise généralement un OTB (acronyme anglais de Oil Transfer Bearing, pour joint hydraulique tournant multi-passage ou transfert d'huile tournant). De manière connue en soi, l'OTB comprend une partie fixe par rapport à une partie stator de la turbomachine et qui est connectée, via des canalisations dédiées, à une servovalve et à une pompe, elle-même connectée au circuit de lubrification moteur comprenant le groupe de lubrification et un réservoir d'huile, et une partie tournante qui est solidaire en mouvement d'une partie rotor de la turbomachine. Cependant, l'OTB est un dispositif complexe et fragile, susceptible de générer des disfonctionnements, notamment d'importantes fuites d'huiles affectant la fiabilité et les performances de la turbomachine et nécessitant la mise en place de pompes de récupération et un surdimensionnement du système d'huile moteur. Par ailleurs, cette configuration présente des limitations de fonctionnement à bas régime puisqu'elle est dépendante du régime du corps haute pression de la turbomachine et peut être sujet à des problématiques de gavage lors de certaines manoeuvres puisqu'elle est dépendante de l'alimentation du circuit d'huile moteur. Enfin, cette configuration nécessite un système permettant de protéger contre une fermeture du calage des aubes en vol suite à défaillance hydraulique. Deux systèmes peuvent être envisagés : un système de verrouillage du pas des pales (« pitch lock » en anglais) ou un système de contrepoids pour assurer la mise en drapeau des aubes (ouverture du pas pour limiter la traînée). Ces deux systèmes sont lourds, complexes, chers et peuvent générer d'autres cas de défaillance comme le blocage intempestif du calage.

En outre, lorsqu'une pompe hydraulique non réversible est utilisée, il est nécessaire d'utiliser une vanne d'inversion de débit afin de permettre au mécanisme de changement de pas de modifier le pas dans ses deux sens de mouvement. Une telle vanne d'inversion est de manière classique pilotée électriquement, elle nécessite donc, si elle est intégrée à l'hélice, un transfert du courant électrique de commande depuis la partie stator de la turbomachine vers la partie rotor (l'hélice) de la turbomachine.

De plus, la mise en fonctionnement du groupe de lubrification étant généralement liée à la mise en fonctionnement de la turbomachine, il est nécessaire de prévoir des systèmes auxiliaires afin d'assurer certaines fonctions de protection, notamment en cas de survitesse ou d'arrêt moteur. Il est donc nécessaire de prévoir un système de mise en drapeau fonctionnel même en cas d'absence de pression de fluide hydraulique.

D'autre part le mécanisme de changement de pas doit pouvoir moteur à l'arrêt assurer la sortie de la position drapeau.

Le document EP1306558A1 propose un dispositif de commande électrohydraulique de variation du pas des pales d'un rotor d'une machine, les pales étant montées sur un fût entraîné en rotation par un arbre d'entraînement de la machine et ayant chacune un pied pouvant pivoter autour d'un axe longitudinal de la pale, l'arbre d'entraînement étant lui même entraîné en rotation par rapport à une structure fixe de la machine, dispositif comportant d'une part un vérin hydraulique dont un piston est solidaire d'un anneau de commande et de synchronisation dans lequel sont engagés des manetons décentrés fixés sous chacun des pieds des pales et dont un corps cylindrique est fermé par un couvercle intégrant une pompe hydraulique haute pression alimentant en fluide hydraulique les deux faces du piston au travers de canaux intégrés dans le corps cylindrique du vérin, et d'autre part un moteur électrique commandé et alimenté en courant par une génératrice de courant comportant un inducteur solidaire de la structure fixe de la machine et un induit solidaire de l'arbre d'entraînement de la machine.

### PRESENTATION DE L'INVENTION

Un but de l'invention est de proposer une turbomachine à calage variable qui surmonte les inconvénients de l'art antérieur mentionnés ci-dessous.

Un autre but de l'invention est de proposer un mécanisme de changement de pas indépendant qui s'affranchisse des difficultés liées au transfert de fluide hydraulique d'un repère fixe vers un repère tournant.

Un autre but de l'invention est de proposer un mécanisme de changement de pas passif, c'est-à-dire qui ne nécessite pas de système et contrôleurs électriques pour la modification du calage de pas d'une hélice (ou soufflante) de turbomachine.

Un autre but encore de l'invention est de propose un mécanisme de changement de pas qui puisse être utilisé quel que soit le fonctionnement de la turbomachine qui soit en outre capable d'assurer les fonctions de protection et de mise en drapeau des pales de l'hélice/de la soufflante de la turbomachine, de préférence sans être dépendant d'un système électrique de contrôle.

Un autre but de l'invention est de proposer un mécanisme de changement de pas qui puisse à la fois être mis en œuvre dans une turbomachine type turbopropulseur ou open rotor comprenant une hélice et un turboréacteur comprenant une soufflante.

A cet effet, l'invention propose, selon un premier aspect, un mécanisme de changement de pas pour une hélice de turbomachine, ladite turbomachine comprenant une partie stator et une partie rotor, ledit mécanisme de changement de pas comprenant un actionneur électrohydraulique comprenant :
- une machine électrique montée fixe sur la partie stator de la turbomachine et comprenant un arbre d'actionnement mobile en rotation autour d'un axe de rotation ;
- un ensemble de pompage comprenant deux pompes hydrauliques à pistons axiaux adaptées pour mettre sous pression un fluide hydraulique, chaque pompe hydraulique comprenant:
   ∘ un barillet logé dans une cavité remplie en tout ou partie par du fluide hydraulique, le barillet étant raccordé fixement à la partie stator de la turbomachine afin d'empêcher sa rotation autour de l'arbre d'actionnement ;
   ∘ un ensemble de cylindres formés dans le barillet chaque cylindre logeant un piston mobile en translation dans le cylindre et comprenant un orifice d'admission configuré pour recevoir du fluide hydraulique en provenance de la cavité, et un orifice de refoulement configuré pour envoyer du fluide hydraulique vers un vérin d'actionnement de l'hélice ;
   ∘ un plateau incliné par rapport à l'axe de rotation et solidaire en rotation de l'arbre d'actionnement, chaque piston prenant appui sur une surface du plateau ;
dans lequel le plateau d'une première des pompe comprend une lunule d'admission s'étendant circonférentiellement par rapport à l'axe de rotation et configurée pour permettre une circulation du fluide hydraulique depuis la cavité vers les cylindres de la première des pompe lorsque le plateau de ladite pompe est entrainé dans un premier sens de rotation, et le plateau d'une deuxième des pompes comprend une lunule d'admission s'étendant circonférentiellement par rapport à l'axe de rotation configurée pour permettre une circulation du fluide hydraulique depuis la cavité vers les cylindres de la deuxième des pompes lorsque le plateau de ladite pompe est entrainé dans un deuxième sens de rotation opposé au premier sens de rotation.

L'invention est avantageusement complétée par les caractéristiques suivantes, prises seules ou en une quelconque de leur combinaison techniquement possible :
- lorsque le plateau de la première pompe est entrainé dans le deuxième sens de rotation, l'orifice d'admission des cylindres est obturé par la surface du plateau de la première pompe et, lorsque le plateau de la deuxième pompe est entrainé dans le premier sens de rotation, l'orifice d'admission des cylindres est obturé par la surface du plateau de la deuxième pompe ;
- les orifices de refoulement des pompes sont adjacents et débouchent dans une zone centrale de l'ensemble de pompage ;
- chaque cylindre comprend en outre un clapet de refoulement monté sur l'orifice de refoulement et configuré pour bloquer une circulation du fluide hydraulique du vérin d'actionnement en direction du cylindre ;
- le mécanisme de changement de pas comprend en outre une rainure annulaire formée dans le corps de chaque pompe, ladite rainure annulaire étant en communication fluidique avec les orifices de refoulement des cylindres de la pompe correspondante ;
- le vérin d'actionnement de l'hélice comprend deux chambres, une première des deux chambres étant en communication fluidique avec la rainure annulaire de la première pompe, une deuxième des deux chambres étant en communication fluidique avec la rainure annulaire de la deuxième pompe ;
- le mécanisme de changement de pas comprend en outre :
   ∘ une première vanne hydraulique configurée pour mettre en communication fluidique la première chambre du vérin soit avec la rainure annulaire de la première pompe lorsque l'arbre d'actionnement est entrainé dans le premier sens de rotation, soit avec un accumulateur hydraulique lorsque l'arbre d'actionnement est entrainé dans le deuxième sens de rotation ; et
   ∘ une deuxième vanne hydraulique configurée pour mettre en communication la deuxième chambre du vérin soit avec la rainure annulaire de la deuxième pompe lorsque l'arbre d'actionnement est entrainé dans le deuxième sens de rotation soit avec l'accumulateur hydraulique lorsque l'arbre d'actionnement est entrainé dans le premier sens de rotation,
- la première vanne hydraulique et la deuxième vanne hydraulique sont chacune pilotées par une pression au niveau de l'orifice de refoulement de la première pompe et de la deuxième pompe, respectivement ;
- la machine électrique (29) est une machine asynchrone ;
- un pas de l'hélice est contrôlé par un asservissement en couple de la machine électrique.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
La figure 1 est une vue en coupe schématique d'un exemple de turbomachine comprenant une soufflante ou une hélice à calage variable et un mécanisme de changement de pas conforme à un mode de réalisation de l'invention ;
La figure 2 est une vue en coupe partielle et schématique d'un exemple de réalisation d'un réducteur mécanique du type planétaire pouvant être utilisé dans une turbomachine comprenant un mécanisme de changement de pas conforme à un mode de réalisation de l'invention ;
La figure 3 est une vue schématique d'un mécanisme de changement de pas d'une hélice selon l'invention ;
La figure 4 est une vue schématique d'un exemple de rainure annulaire formée dans le corps d'une pompe ;
La figure 5 est une vue schématique d'un exemple de lunule d'admission formée dans le plateau d'une pompe ;
La figure 6 est une vue schématique d'un mécanisme de changement de pas d'une hélice selon un mode de réalisation ; et
La figure 7 est une vue schématique d'un mécanisme de changement de pas d'une hélice selon un mode de réalisation.

### DESCRIPTION DETAILLEE

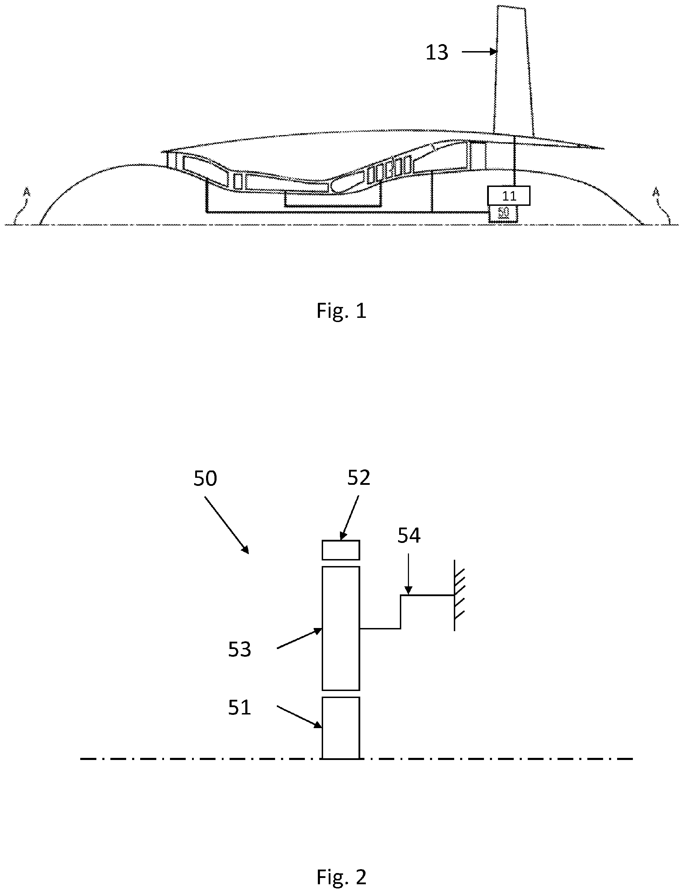

La présente invention s'applique à toute turbomachine à calage variable comprenant un mécanisme de changement de pas. En particulier, l'invention concerne à la fois les turboréacteurs à double flux comprenant une soufflante et les turbomachines à hélice telles que les turbopropulseurs ou encore les open rotor (hélice non carénée) tels que représenté à la **figure 1****,** dont le pas des pales de la soufflante ou de l'hélice est modifiable en fonction des conditions de vol. Dans la suite de la demande, par souci de simplification de la description et des revendications, le terme « hélice » sera utilisé aussi bien pour désigner une hélice comme décrite ci-dessus ou une soufflante d'un turboréacteur.

De manière conventionnelle, la turbomachine comprend, en plus de l'hélice, un réducteur mécanique 50, tel qu'illustré par la **figure 2****,** configuré pour entrainer en rotation l'hélice. Le réducteur 50 est logé dans un carter de la turbomachine. La turbomachine est configurée pour être montée fixement sur un aéronef par l'intermédiaire de moyens de fixation adaptés, tels qu'un pylône. Dans ce qui suit, on désignera ainsi une partie stator de la turbomachine toute partie montée fixement sur une partie de la turbomachine qui est fixe par rapport au carter qui est configuré pour être raccordé au pylône, et une partie rotor de la turbomachine toute partie qui est mobile autour d'un axe lorsque la turbomachine est en fonctionnement et qui, par définition, est donc montée mobile par rapport à la partie stator. A titre d'exemple, la partie stator comprend le carter de la turbomachine dans lequel sont logés des moyens d'entrainement de l'hélice, etc. La partie rotor comprend par exemple l'hélice ainsi que son arbre d'entrainement.

Enfin, dans la présente demande, l'amont et l'aval sont définis par rapport au sens d'écoulement normal du gaz dans et à travers l'hélice. Par ailleurs, on appelle axe A de la pompe hydraulique, son axe de rotation. La direction axiale correspond à la direction de l'axe A et une direction radiale est une direction perpendiculaire à cet axe et passant par lui. Par ailleurs, la direction circonférentielle (ou latérale) correspond à une direction perpendiculaire à l'axe A et ne passant pas par lui. Sauf précision contraire, intérieur et extérieur, respectivement, sont utilisés en référence à une direction radiale de sorte que la partie ou la face interne d'un élément est plus proche de l'axe A que la partie ou la face externe du même élément. De plus, un élément est considéré « dans un repère fixe » lorsque celui-ci est maintenu immobile en rotation par rapport à l'axe A, tandis qu'il est considéré « dans un repère tournant » lorsqu'il est susceptible d'être entrainé en rotation par rapport à l'axe A.

Le réducteur 50 est de type planétaire et comprend :
- un pignon solaire 51, centré sur un axe de rotation du réducteur et configuré pour être entrainé en rotation par un arbre d'entrée d'entrainement de la turbomachine,
- une couronne 52, coaxiale avec le pignon solaire 51 et configurée pour entrainer en rotation l'arbre d'entrainement de l'hélice autour de l'axe de rotation, et
- une série de satellites 53 répartis circonférentiellement autour de l'axe de rotation du réducteur entre le pignon solaire 51 et la couronne 52, chaque satellite étant engrené intérieurement avec le pignon solaire 51 et extérieurement avec la couronne 52. La série de satellites 53 est montée sur un porte-satellites 54 qui est fixe par rapport à une partie stator de la turbomachine.

En variante, le réducteur 50 peut être épicycloïdal, auquel cas la couronne 52 est montée fixement sur une partie stator de la turbomachine et l'arbre d'entrainement est entrainé en rotation par le porte-satellites 54.

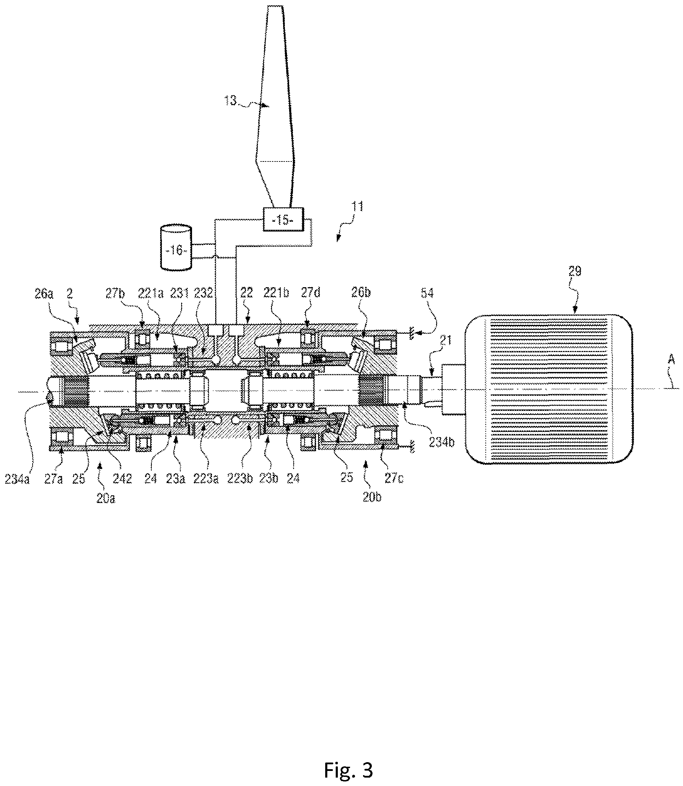

Comme illustré sur la **figure 3****,** le mécanisme de changement de pas comprend un actionneur électrohydraulique 11 (EHA, acronyme anglais de « Electro Hydraulic Actuator »), configuré pour actionner un vérin 15 qui est raccordé mécaniquement à l'hélice 13 afin d'en modifier le pas, un ensemble de pompage 2 configuré pour mettre sous pression un fluide (typiquement de l'huile) et une machine électrique 29.

La machine électrique 29 est montée fixe sur la partie stator de la turbomachine et comprend un arbre d'actionnement 21 mobile en rotation autour d'un axe de rotation A.

L'ensemble de pompage 2 comprend deux pompes hydrauliques à pistons axiaux 20a, 20b adaptées pour mettre sous pression un fluide hydraulique partageant un même corps 22 entrainé en rotation par l'hélice 13.

Chacune des pompes 20a, 20b comprend un barillet 23a (respectivement 23b), logé dans une cavité 221a (resp. 221b) cette dernière étant remplie en tout ou partie par du fluide hydraulique, ainsi qu'un plateau 26a (resp. 26b). Dans ce barillet 23a (resp. 23b) est formé un ensemble d'alésage définissant des cylindres configurés pour recevoir à coulissement des pistons 24. L'axe de translation des pistons 24 est sensiblement parallèle à l'axe de rotation A. Chaque piston 24 comprend un patin de glissement 25 configuré pour venir en appui contre le plateau 26a (resp. 26b).

Le barillet 23a (resp. 23b) de chacune des deux pompes 20a, 20b et les pistons 24 associés sont raccordés fixement à la partie stator de la turbomachine afin d'empêcher leur rotation autour de l'arbre d'actionnement 21. Les barillets 23, 23b sont donc immobiles en rotation autour de l'axe A (donc dans le repère fixe). Les barillets 23a, 23b peuvent notamment être raccordés mécaniquement. Dans une forme de réalisation, lorsque le réducteur 50 est planétaire, les deux barillets 23a, 23b sont fixés solidairement sur le porte-satellites 54 du réducteur 50, immobilisant le deuxième barillet. En variante, lorsque le réducteur 50 est du type épicycloïdal (arbre d'entrainement entrainé par le porte-satellites 54), les barillets peuvent être montés sur la couronne 52.

Les deux plateau 26a et 26b sont montés autour de l'arbre d'actionnement 21 en étant inclinés par rapport à l'axe de rotation A et solidaires en rotation de l'arbre d'actionnement 21. Les plateaux 26a, 26b sont donc entrainés en rotation par l'arbre d'actionnement 12. Les patins de glissement 25 des pistons 24 sont configurés pour glisser librement le long du plateau 26a (resp. 26b) tout en étant en appui contre celui-ci (contact continu) quelle que soit la position angulaire des pistons 24 autour de l'axe de rotation A.

Les deux barillets 23a, 23b sont montés autour de l'arbre d'actionnement 21. Les barillets 23a, 23b étant dans le repère fixe alors que l'arbre d'actionnement 21 est configuré pour être entrainé en rotation par la machine électrique 29 autour de l'axe A, ils comprennent chacun un orifice traversant 234a, 234b configuré pour recevoir l'arbre d'actionnement 21 de la machine électrique 29. Les orifices traversants 234a et 234b sont coaxiaux et, le cas échéant, communicants.

Afin de permettre le blocage en rotation du barillet 23a, 23b, l'actionneur électrohydraulique 11 comprend un premier roulement 27a (resp. 27c), configuré pour supporter le plateau 26a (resp. 26b) de la première pompe 20a (resp. de la deuxième pompe 20b) et un deuxième roulement 27b (resp. 27d) configuré pour supporter le barillet 23a (resp. 23b) de la première pompe 20a (reps. de la deuxième pompe 20b). Le premier roulement 27a (reps. 27c) peut par exemple être monté entre le plateau 26a (reps. 26b) et le barillet 23a (reps. 23b), en particulier au niveau d'une portion reliant ce dernier au repère fixe pour la première pompe 20a, tandis que le deuxième roulement 27b (resp. 27d) est monté entre le barillet 23a, (resp. 23b) et le corps 22.

Lors du fonctionnement de l'actionneur électrohydraulique 11, les deux plateaux 26a, 26b sont entrainés en rotation par l'arbre d'actionnement 21 autour de l'axe de rotation A. Les deux barillets 23a, 23b sont fixes. Les pistons 25 des deux pompes 20a, 20b étant en appui continu contre leur plateau 26a, 26b respectif, ce mouvement de rotation a pour effet de déplacer les patins de glissement 25 des pistons 24 suivant un axe parallèle à l'axe de rotation A générant ainsi un mouvement de va-et-vient dont l'amplitude est déterminée par l'inclinaison des plateaux 26a, 26b par rapport à l'axe de rotation A.

Dans un mode de réalisation, les orifices de refoulement 232 des pompes 20a, 20b sont adjacents et débouchent dans une zone centrale de l'ensemble de pompage 2. Les plateaux 26a, 26b sont alors positionnés chacun à une extrémité opposée de l'ensemble de pompage 2, en étant coaxiaux à l'axe de rotation A. L'ensemble de pompage 2 comprend donc successivement, le long de l'axe de rotation A, le premier plateau 26a, le barillet 23a, les orifices de refoulement 232 de la pompe 20a, la rainure annulaire de la pompe 20a, la rainure annulaire de la pompe 20b, les orifices de refoulement 232 de la pompe 20b, le barillet 23b et le deuxième plateau 26b. Les barillets 23a, 23b sont donc disposés de manière à ce que les patins de glissement 25 des pistons 24 soient dirigés vers les extrémités selon l'axe de rotation A de l'ensemble de pompage 2.

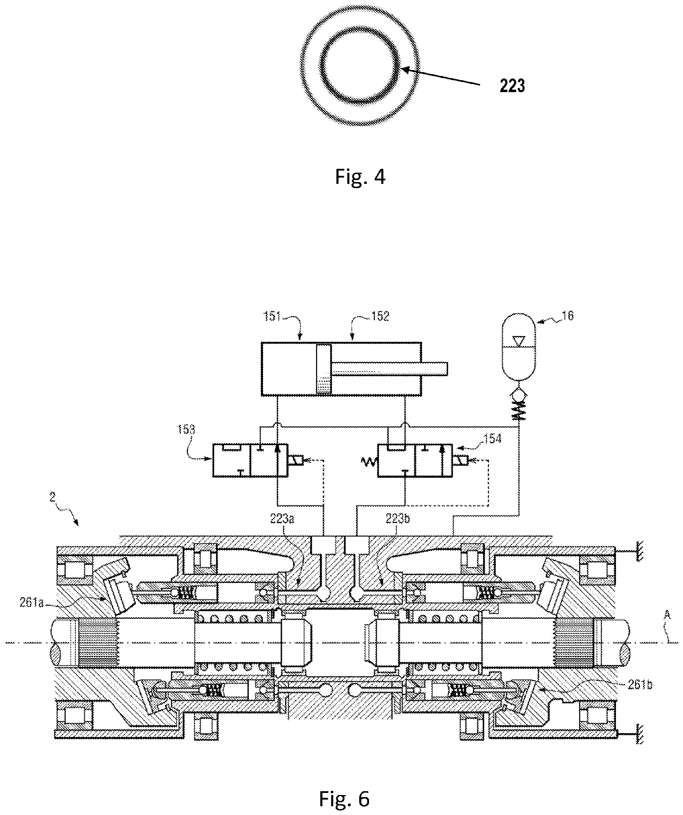

Dans chacune des pompes, les cylindres comprennent un orifice d'admission 242 configuré pour recevoir du fluide hydraulique en provenance de la cavité 211a, 211b ainsi qu'un orifice de refoulement 232 configuré pour refouler le fluide hydraulique contenu dans le cylindre vers le vérin 15 d'actionnement de l'hélice par l'intermédiaire d'une rainure annulaire 223a, 223b formée dans le corps 22 (**figure 4**). L'utilisation d'une telle rainure annulaire en communication fluidique avec les orifices de refoulement 232 des cylindres permet à la pompe de fonctionner quelle que soit la position angulaire du corps 22 et donc des orifices de refoulement 232 lors du mouvement des pistons 24.

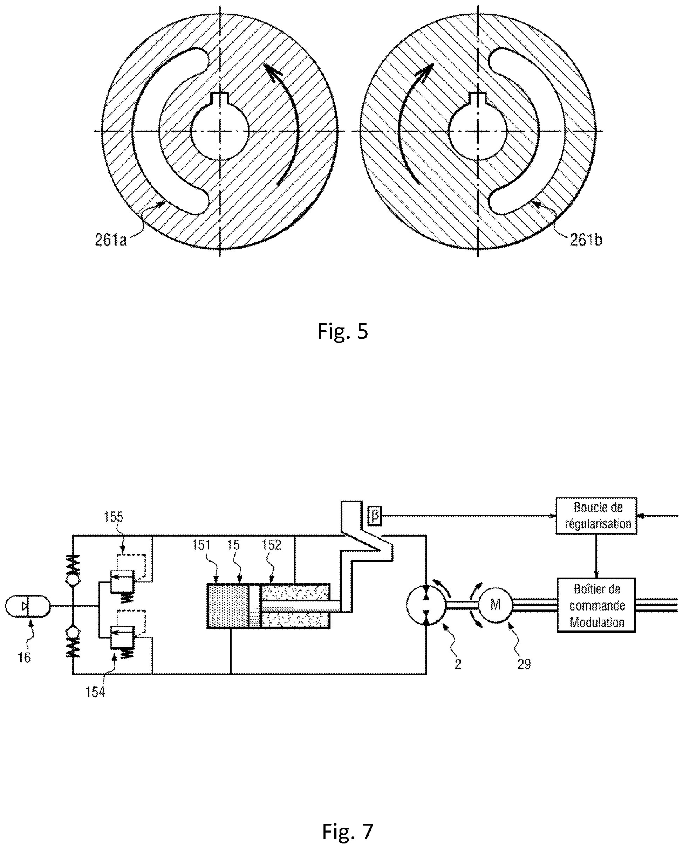

En outre, le plateau 26a de la première des pompes 20a comprend une lunule d'admission 261a (**figure 5**) s'étendant circonférentiellement par rapport à l'axe de rotation A. Cette lunule est configurée pour permettre une circulation du fluide hydraulique depuis la cavité 221a vers les cylindres de la première des pompe 20a lorsque le plateau 26a de la pompe 20a est entrainé dans un premier sens de rotation autour de l'axe de rotation A.

De manière symétrique, le plateau 26b de la deuxième des pompes 20b comprend une lunule d'admission 261b s'étendant circonférentiellement par rapport à l'axe de rotation A. Cette lunule est configurée pour permettre une circulation du fluide hydraulique depuis la cavité 221b vers les cylindres de la deuxième des pompes 20b lorsque le plateau 26b de ladite pompe 20b est entrainé dans un deuxième sens de rotation autour de l'axe de rotation A qui est opposé au premier sens de rotation.

Par exemple, chaque lunule d'admission 261a, 261b s'étend circonférentiellement par rapport à l'axe de rotation A de sorte à former un demi-cercle. La lunule d'admission 261a est alors symétrique par rapport à la lunule d'admission 261b, c'est-à-dire qu'elles sont diamétralement opposées.

Les pompes 20a, 20b comprennent en outre des moyens d'obturation configurés pour obturer l'orifice d'admission 242 des cylindres pour empêcher le fluide hydraulique d'entrer dans les cylindres lorsque la pompe 20a, 20b doit être non débitante, c'est-à-dire lorsque l'axe de rotation tourne dans le deuxième sens pour la première pompe 20a et dans le deuxième sens pour la pompe 20b. Dans une première variante de réalisation, les moyens d'obturation comprennent un clapet d'admission monté au niveau de l'orifice d'admission 242 de chaque cylindre. Chaque clapet d'admission présente une configuration ouverte, dans laquelle le clapet d'admission est ouvert permet au fluide hydraulique de circuler du barillet vers le cylindre, et une configuration fermée, dans laquelle le clapet d'admission ferme le cylindre et empêche la circulation de fluide hydraulique entre le cylindre et le barillet 23a, 23b correspondant. En configuration fermée, le clapet d'admission permet ainsi de bloquer le retour de fluide hydraulique sous pression en provenance du cylindre en direction du barillet 23a, 23b. Les barillets 23a, 23b étant mobiles en rotation, les clapets d'admission 241 sont de préférence montés à l'intérieur des cylindres et se positionnent automatiquement (de manière passive) en configuration ouverte ou fermée en fonction de la position du piston 24 dans le cylindre. Le cas échéant, les clapets d'admission 241 peuvent notamment être montés à proximité du patin de glissement 25.

Dans une variante de réalisation, qui peut être cumulée avec la première variante, la fonction des moyens d'obturation est réalisée directement par le plateau 26a, 26b de la pompe 20a, 20b. A cet effet, chaque plateau 26a, 26b peut être configuré de sorte que sa surface obture l'orifice d'admission 242 des cylindres lorsque le plateau 26a est entrainé dans le sens de rotation dans lequel la pompe 20a, 20b correspondante est non débitante (c'est-à-dire le deuxième sens de rotation dans le cas de la première pompe 20a et le deuxième sens de rotation dans le cas de la deuxième pompe 20b). Par exemple, la surface de chaque plateau 26a, 26b peut comprendre la lunule d'admission 261a, 261b, qui s'étend circonférentiellement par rapport à l'axe de rotation A sur une première moitié de cercle de sorte à former un demi-cercle, et être pleine voire comprendre une protubérance circonférentielle par rapport à l'axe de rotation A sur la deuxième moitié de cercle.

De la sorte, seule l'une des deux pompes 20a, 20b est débitante, selon le sens de rotation de l'arbre d'actionnement 21. En effet, lorsque l'arbre d'actionnement tourne dans le premier sens de rotation, les orifices d'admission 242 des cylindres de la première pompe 20a se trouvent en regard de la lunule d'admission 261a lorsque les pistons sont en phase d'admission, ce qui permet au fluide hydraulique d'entrer dans les alésages du barillet 23a. En revanche, les orifices d'admission 242 des cylindres de la deuxième pompe 20b se trouve en regard de la partie pleine du plateau 26b, qui obture les orifices d'admission 242 et ne permet ainsi pas l'entrée de fluide hydraulique dans les alésages du barillet 23b. Ainsi, seule la première pompe 20a est débitante.

Inversement, lorsque l'arbre d'actionnement tourne dans le deuxième sens de rotation, les orifices d'admission 242 des cylindres de la deuxième pompe 20b se trouvent en regard de la lunule d'admission 261b lorsque les pistons sont en phase d'admission, ce qui permet au fluide hydraulique d'entrer dans les alésages du barillet 23b. En revanche, les orifices d'admission 242 des cylindres de la première pompe 20a se trouve en regard de la partie pleine du plateau 26a, qui obture les orifices d'admission 242 et ne permet ainsi pas l'entrée de fluide hydraulique dans les alésages du barillet 23a. Ainsi, seule la deuxième pompe 20b est débitante.

Dans une forme de réalisation, chaque cylindre comprend des moyens configurés pour obturer ou ouvrir l'orifice de refoulement 232. Dans une forme de réalisation, ces moyens comprennent un clapet de refoulement 231 monté au niveau de l'orifice de refoulement 232. Chaque clapet de refoulement 231 présente une configuration ouverte, dans laquelle le clapet de refoulement 231 est ouvert et permet au fluide hydraulique de circuler du cylindre vers la rainure annulaire, et une configuration fermée, dans laquelle le clapet de refoulement 231 obture le cylindre et empêche la circulation de fluide hydraulique entre le cylindre et la rainure annulaire. En configuration fermée, le clapet de refoulement 231 permet ainsi de bloquer le retour de fluide hydraulique sous pression en provenance de la rainure annulaire 223a, 223b en direction des cylindres. Le corps 22 étant mobile en rotation, les clapets de refoulement 231 sont de préférence montés à l'intérieur des cylindres et se positionnent automatiquement (de manière passive) en configuration ouverte ou fermée en fonction de la position du piston 24 dans le cylindre.

Le vérin 15 comprend de préférence un vérin double effet comprenant une première chambre 151 et une deuxième chambre 152. Le vérin 15 est par ailleurs solidaire en rotation de l'hélice 13 et raccordé à celle-ci de sorte que l'actionnement du vérin 15 (par remplissage et vidage successifs des première et deuxième chambres) a pour effet de modifier le pas de l'hélice 13 dans un sens ou dans l'autre.

En référence à la **figure 6****,** l'actionneur électrohydraulique 11 comprend en outre une vanne 153, 154 à deux voies passantes présentant deux positions raccordée fluidiquement à chaque pompe 20a, 20b et un accumulateur hydraulique 16 qui est monté dans le repère tournant de l'hélice. Chaque vanne 153, 154 est pilotée par la pression du fluide hydraulique au niveau de la rainure annulaire de la pompe 20a, 20b correspondante entre une première position, dite d'actionnement, dans laquelle la vanne 153, 154 met en communication fluidique l'une des chambres du vérin 15 avec la rainure annulaire de la pompe correspondante et une deuxième position dans laquelle la vanne 153, 154 met en communication fluidique cette même chambre du vérin 15 avec l'accumulateur hydraulique. La vanne 153, 154 se place dans la première position lorsque la pression en sortie de pompe 20a, 20b surmonte la raideur du ressort associé à cette vanne 153, 154. Chaque vanne 153, 154 se déplace donc entre la première position et la deuxième position de manière passive en fonction de la pression du fluide hydraulique au niveau de la sortie de la pompe 20a, 20b correspondant, qui dépend du sens de rotation de l'arbre d'actionnement 21.

Plus précisément, la première vanne 153, qui est pilotée par la pression en sortie de la première pompe 20a, est configurée pour mettre en communication fluidique la première chambre 151 du vérin 15 soit avec la rainure annulaire de la première pompe 20a lorsque l'arbre d'actionnement 21 tourne dans le premier sens de rotation (la première pompe 20a refoulant du fluide sous pression par la rainure annulaire), soit avec l'accumulateur hydraulique 16 lorsque l'arbre d'actionnement 21 est entrainé dans le deuxième sens de rotation. De même, la vanne 154 raccordée fluidiquement à la deuxième pompe 20b est configurée pour mettre en communication fluidique la deuxième chambre 152 du vérin 15 soit avec la rainure annulaire de la deuxième pompe 20b lorsque l'arbre d'actionnement 21 tourne dans le deuxième sens de rotation (la deuxième pompe 20b refoulant du fluide sous pression par la rainure annulaire), soit avec l'accumulateur hydraulique 16 lorsque l'arbre d'actionnement tourne dans le premier sens de rotation.

L'actionnement de l'arbre d'actionnement 21 de l'ensemble de pompage 2 dans le premier sens de rotation par la machine électrique 29 a donc pour effet de remplir la première chambre 151 du vérin 15 et de vider sa deuxième chambre 152, tandis que l'actionnement de l'arbre d'actionnement 21 dans le deuxième sens de rotation à pour effet de remplir la deuxième chambre 152 du vérin 15 et de vider sa première chambre 151. Le pas de l'hélice, qui dépend de la pression de fluide dans la première chambre 151 et dans la deuxième chambre 152 du vérin 15, peut donc être entièrement contrôlé par la machine électrique 29. Un tel mode de fonctionnement permet ainsi de s'affranchir de la nécessiter d'utiliser une vanne d'inversion de débit pour sélectionner la chambre du vérin vers laquelle diriger de fluide hydraulique sous pression.

En outre, le pas étant directement contrôlé par la pression hydraulique produite par la pompe hydraulique 20, qui dépend de la vitesse de déplacement des pistons 24, le contrôle du pas de l'hélice 13 peut être réalisé grâce à un asservissement en couple de la machine électrique 29. Dans une forme de réalisation, la machine électrique 29 est une machine asynchrone, une telle machine n'induisant pas de couple résistif en cas de court-circuitage et réduisant ainsi les risques de feu.

On notera ici que l'ensemble de pompage 2 ne comporte que des moyens d'actionnement passifs, les vannes étant pilotées uniquement par la pression en sortie de pompe 20a, 20b. Aucun contrôleur ni système électrique n'est donc nécessaire, en dehors des moyens électriques nécessaires au contrôle du moteur électrique 29.

De manière conventionnelle, le mécanisme de changement de pas peut en outre comprendre un système de mise en drapeau fonctionnel en cas d'absence de pression de fluide hydraulique. Dans une forme de réalisation, le système de mise en drapeau comprend des contrepoids du type masselotte.

Cette configuration du mécanisme de changement de pas permet ainsi de s'affranchir de l'utilisation d'un transfert d'huile tournant (OTB), supprimant ainsi les risques de fuite et les contraintes de dimensionnement associé du système d'actionnement de pas et du circuit de lubrification de la turbomachine. Le circuit est en outre indépendant du groupe de lubrification et plus généralement du circuit de lubrification de la turbomachine. La solution proposée reposant sur un circuit hydraulique fermé indépendant du circuit de lubrification turbomachine, il n'y a en particulier plus de problématique de gavage suivant les manoeuvres de vol. En particulier, la pression délivrée par la pompe hydraulique 20 peut atteindre des niveaux importants (de l'ordre de 300 bars), ce qui facilite le dimensionnement du vérin 15. En particulier également, l'entraînement de la pompe est réalisé par un moteur électrique. On peut donc envisager une alimentation par diverses sources de puissance électriques, rendant ce système indépendant de la vitesse de rotation du corps HP de la turbomachine.

On notera ici que la mise en drapeau ne comporte que des moyens d'actionnement passifs, la vanne de sécurité 18 et la vanne supplémentaire 19 étant pilotées uniquement par la pression dans le circuit hydraulique du mécanisme de changement de pas. Aucun contrôleur ni système électrique n'est donc nécessaire, en dehors des moyens électriques nécessaires au contrôle de la vanne d'inversion de débit et du moteur électrique 29.

## Revendications

1. Mécanisme de changement de pas d'une hélice (10) de turbomachine, ladite turbomachine comprenant une partie stator et une partie rotor, ledit mécanisme de changement de pas comprenant un actionneur électrohydraulique (11) comprenant :
- une machine électrique (29) configurée pour être montée fixe sur la partie stator de la turbomachine et comprenant un arbre d'actionnement (21) mobile en rotation autour d'un axe de rotation (A) ;
- un ensemble de pompage (2) comprenant deux pompes hydrauliques à pistons axiaux (20) adaptées pour mettre sous pression un fluide hydraulique, chaque pompe hydraulique (20) comprenant:
- un barillet (23a, 23b) logé dans une cavité (221a, 221b) remplie en tout ou partie par du fluide hydraulique, le barillet (23a, 23b) étant configuré pour être raccordé fixement à la partie stator de la turbomachine afin d'empêcher sa rotation autour de l'arbre d'actionnement (21) ;
- un ensemble de cylindres formés dans le barillet (23a, 23b) chaque cylindre logeant un piston (24) mobile en translation dans le cylindre et comprenant un orifice d'admission (242) configuré pour recevoir du fluide hydraulique en provenance de la cavité (221a, 221b), et un orifice de refoulement (232) configuré pour envoyer du fluide hydraulique vers un vérin (15) d'actionnement de l'hélice ;
- un plateau (26a, 26b) incliné par rapport à l'axe de rotation (A) et solidaire en rotation de l'arbre d'actionnement (21), chaque piston (24) prenant appui sur une surface du plateau (26a, 26b) ;
dans lequel le plateau d'une première des pompe (20a) comprend une lunule d'admission (261a) s'étendant circonférentiellement par rapport à l'axe de rotation (A) et configurée pour permettre une circulation du fluide hydraulique depuis la cavité (221a) vers les cylindres de la première des pompe (20a) lorsque le plateau (26a, 26b) de ladite pompe (20a) est entrainé dans un premier sens de rotation, et le plateau (26a, 26b) d'une deuxième des pompes (20b) comprend une lunule d'admission (261b) s'étendant circonférentiellement par rapport à l'axe de rotation (A) et configurée pour permettre une circulation du fluide hydraulique depuis la cavité (221b) vers les cylindres de la deuxième des pompes (20b) lorsque le plateau (26b) de ladite pompe (20b) est entrainé dans un deuxième sens de rotation opposé au premier sens de rotation.

2. Mécanisme selon la revendication 1 dans lequel, lorsque le plateau (26a) de la première pompe (20a) est entrainé dans le deuxième sens de rotation, l'orifice d'admission (242) des cylindres est obturé par la surface du plateau de la première pompe (20a) et, lorsque le plateau (26b) de la deuxième pompe (20b) est entrainé dans le premier sens de rotation, l'orifice d'admission (242) des cylindres est obturé par la surface du plateau de la deuxième pompe (20b).

3. Mécanisme de changement de pas selon l'une des revendications 1 ou 2, dans lequel les orifices de refoulement (232) des pompes sont adjacents et débouchent dans une zone centrale de l'ensemble de pompage (2).

4. Mécanisme de changement de pas selon l'une des revendications 1 à 3, dans lequel chaque cylindre comprend en outre un clapet de refoulement (231) monté sur l'orifice de refoulement (232) et configuré pour bloquer une circulation du fluide hydraulique du vérin (15) d'actionnement en direction du cylindre.

5. Mécanisme de changement de pas selon l'une des revendications 1 à 4, comprenant en outre une rainure annulaire (222a, 222b) formée dans le corps (22) de chaque pompe, ladite rainure annulaire (222a, 222b) étant en communication fluidique avec les orifices de refoulement (232) des cylindres de la pompe correspondante.

6. Mécanisme de changement de pas selon la revendication 5, dans lequel le vérin (15) d'actionnement de l'hélice comprend deux chambres, une première des deux chambres étant en communication fluidique avec la rainure annulaire (222a) de la première pompe (20a), une deuxième des deux chambres étant en communication fluidique avec la rainure annulaire (222b) de la deuxième pompe (20b).

7. Mécanisme de changement de pas selon la revendication 6, comprenant en outre :
- une première vanne hydraulique (153) configurée pour mettre en communication fluidique la première chambre (151) du vérin soit avec la rainure annulaire (222a) de la première pompe (20a) lorsque l'arbre d'actionnement (A) est entrainé dans le premier sens de rotation, soit avec un accumulateur hydraulique (16) lorsque l'arbre d'actionnement (A) est entrainé dans le deuxième sens de rotation ; et
- une deuxième vanne hydraulique (154) configurée pour mettre en communication la deuxième chambre (152) du vérin soit avec la rainure annulaire (222b) de la deuxième pompe (20b) lorsque l'arbre d'actionnement (A) est entrainé dans le deuxième sens de rotation soit avec l'accumulateur hydraulique (16) lorsque l'arbre d'actionnement (A) est entrainé dans le premier sens de rotation.

8. Mécanisme de changement de pas selon la revendication 7, dans lequel la première vanne hydraulique (153) et la deuxième vanne hydraulique (154) sont chacune pilotées par une pression au niveau de l'orifice de refoulement (232) de la première pompe (20a) et de la deuxième pompe (20b), respectivement.

9. Mécanisme de changement de pas selon l'une des revendications 1 à 8, dans lequel la machine électrique (29) est une machine asynchrone.

10. Mécanisme de changement de pas selon l'une des revendications 1 à 9, dans lequel un pas de l'hélice (13) est contrôlé par un asservissement en couple de la machine électrique (29).

11. Turbomachine comprenant une hélice (13) et un mécanisme de changement de pas selon l'une des revendications 1 à 10 configuré pour actionner un vérin (15) qui est raccordé mécaniquement à l'hélice (13).

12. Aéronef comprenant au moins une turbomachine selon la revendication 11 raccordée sur l'aéronef par l'intermédiaire d'un pylône.

## Patentansprüche

1. Mechanismus zum Ändern der Blattanstellung einer Luftschraube (10) einer Turbomaschine, wobei die Turbomaschine einen Statorteil und einen Rotorteil umfasst, wobei der Mechanismus zum Ändern der Blattanstellung einen elektrohydraulischen Aktuator (11) umfasst, der umfasst:
- eine elektrische Maschine (29), die zur festen Anbringung am Statorteil der Turbomaschine ausgelegt ist und eine Antriebswelle (21) umfasst, die um eine Drehachse (A) rotationsbeweglich ist;
- eine Pumpeneinheit (2), die zwei Axialkolben-Hydraulikpumpen (20) umfasst, die geeignet sind, ein Hydraulikfluid unter Druck zu setzen, wobei jede Hydraulikpumpe (20) umfasst:
- einen Zylinderstern (23a, 23b), der in einem Hohlraum (221a, 221b) untergebracht ist, der ganz oder teilweise mit Hydraulikfluid gefüllt ist, wobei der Zylinderstern (23a, 23b) zur festen Anbringung am Statorteil der Turbomaschine ausgelegt ist, um seine Drehung um die Antriebswelle (21) zu verhindern;
- eine in dem Zylinderstern (23a, 23b) ausgebildete Zylinderanordnung, wobei jeder Zylinder einen Kolben (24) aufnimmt, der in dem Zylinder translationsbeweglich ist und eine Einlassöffnung (242) umfasst, die zur Aufnahme des Hydraulikfluids aus dem Hohlraum (221a, 221b) ausgelegt, und eine Auslassöffnung (232), die zur Abgabe des Hydraulikfluids zu einem Betätigungszylinder (15) der Luftschraube ausgelegt ist;
- eine Platte (26a, 26b), die relativ zur Drehachse (A) geneigt und drehfest mit der Antriebswelle (21) verbunden ist, wobei jeder Kolben (24) auf einer Fläche der Platte (26a, 26b) aufliegt;
wobei die Platte einer ersten der Pumpen (20a) eine Einlasslünette (261a) umfasst, die sich umfangmäßig relativ zur Drehachse (A) erstreckt und ausgelegt ist, um eine Zirkulation des Hydraulikfluids aus dem Hohlraum (221a) zu den Zylindern der ersten der Pumpen (20a) zu ermöglichen, wenn die Platte (26a, 26b) der Pumpe (20a) in einer ersten Drehrichtung angetrieben wird, und die Platte (26a, 26b) einer zweiten der Pumpen (20b) eine Einlasslünette (261b) umfasst, die sich umfangmäßig relativ zur Drehachse (A) erstreckt und ausgelegt ist, um eine Zirkulation des Hydraulikfluids aus dem Hohlraum (221b) zu den Zylindern der zweiten der Pumpen (20b) zu ermöglichen, wenn die Platte (26b) der Pumpe (20b) in einer zweiten, der ersten Drehrichtung entgegengesetzten Drehrichtung angetrieben wird.

2. Mechanismus nach Anspruch 1, wobei, wenn die Platte (26a) der ersten Pumpe (20a) in der zweiten Drehrichtung angetrieben wird, die Einlassöffnung (242) der Zylinder von der Oberfläche der Platte der ersten Pumpe (20a) verschlossen ist und wenn die Platte (26b) der zweiten Pumpe (20b) in der ersten Drehrichtung angetrieben wird, die Einlassöffnung (242) der Zylinder von der Oberfläche der Platte der zweiten Pumpe (20b) verschlossen ist.

3. Mechanismus zum Ändern der Blattanstellung nach einem der Ansprüche 1 oder 2, wobei die Auslassöffnungen (232) der Pumpen benachbart sind und in einen mittleren Bereich der Pumpeneinheit (2) münden.

4. Mechanismus zum Ändern der Blattanstellung nach einem der Ansprüche 1 bis 3, wobei jeder Zylinder ferner ein Auslassventil (231) umfasst, das an der Auslassöffnung (232) angebracht und ausgelegt ist, um eine Zirkulation des Hydraulikfluids vom Betätigungszylinder (15) in Richtung des Zylinders zu blockieren.

5. Mechanismus zum Ändern der Blattanstellung nach einem der Ansprüche 1 bis 4, der ferner eine Ringnut (222a, 222b) umfasst, die im Körper (22) jeder Pumpe ausgebildet ist, wobei die Ringnut (222a, 222b) in Fluidkommunikation mit den Auslassöffnungen (232) der Zylinder der entsprechenden Pumpe steht.

6. Mechanismus zum Ändern der Blattanstellung nach Anspruch 5, wobei der Betätigungszylinder (15) der Luftschraube zwei Kammern umfasst, wobei eine erste der beiden Kammern in Fluidkommunikation mit der Ringnut (222a) der ersten Pumpe (20a) steht, wobei eine zweite der beiden Kammern in Fluidkommunikation mit der Ringnut (222b) der zweiten Pumpe (20b) steht.

7. Mechanismus zum Ändern der Blattanstellung nach Anspruch 6, der ferner umfasst:
- ein erstes Hydraulikventil (153), das ausgelegt ist, um die erste Kammer (151) des Zylinders entweder mit der Ringnut (222a) der ersten Pumpe (20a) in Fluidkommunikation zu versetzen, wenn die Antriebswelle (A) in der ersten Drehrichtung angetrieben wird, oder mit einem Hydrospeicher (16), wenn die Antriebswelle (A) in der zweiten Drehrichtung angetrieben wird; und
- ein zweites Hydraulikventil (154), das ausgelegt ist, um die zweite Kammer (152) des Zylinders entweder mit der Ringnut (222b) der zweiten Pumpe (20b) in Kommunikation zu versetzen, wenn die Antriebswelle (A) in der zweiten Drehrichtung angetrieben wird, oder mit dem Hydrospeicher (16), wenn die Antriebswelle (A) in der ersten Drehrichtung angetrieben wird.

8. Mechanismus zum Ändern der Blattanstellung nach Anspruch 7, wobei das erste Hydraulikventil (153) und das zweite Hydraulikventil (154) jeweils durch einen Druck im Bereich der Auslassöffnung (232) der ersten Pumpe (20a) und beziehungsweise der zweiten Pumpe (20b) gesteuert werden.

9. Mechanismus zum Ändern der Blattanstellung nach einem der Ansprüche 1 bis 8, wobei die elektrische Maschine (29) eine Asynchronmaschine ist.

10. Mechanismus zum Ändern der Blattanstellung nach einem der Ansprüche 1 bis 9, wobei eine Blattanstellung der Luftschraube (13) durch eine Drehmomentregelung der elektrischen Maschine (29) gesteuert wird.

11. Turbomaschine, umfassend eine Luftschraube (13) und einen Mechanismus zum Ändern der Blattanstellung nach einem der Ansprüche 1 bis 10, der zum Betätigen eines Zylinders (15) ausgelegt ist, der mit der Luftschraube (13) mechanisch verbunden ist.

12. Luftfahrzeug, umfassend mindestens eine Turbomaschine nach Anspruch 11, die über einen Pylon mit dem Luftfahrzeug verbunden ist.

## Claims

1. A pitch change mechanism for a turbomachine propeller (10), said turbomachine comprising a stator part and a rotor part, said pitch change mechanism comprising an electrohydraulic actuator (11) comprising:
- an electric machine (29) configured to be fixedly mounted on the stator part of the turbomachine and comprising an actuating shaft (21) rotationally movable about an axis of rotation (A);
- a pumping assembly (2) comprising two axial-piston hydraulic pumps (20) suitable for pressurizing a hydraulic fluid, each hydraulic pump (20) comprising:
- a barrel (23a, 23b) housed in a cavity (221a, 221b) filled entirely or partly with hydraulic fluid, the barrel (23a, 23b) being configured to be fixedly connected to the stator part of the turbomachine to prevent its rotation about the actuating shaft (21);
- a set of cylinders formed inside the barrel (23a, 23b) each cylinder housing a piston (24) movable in translation in the cylinder and comprising an intake hole (242) configured to receive hydraulic fluid coming from the cavity (221a, 221b), and a discharge hole (232) configured to send hydraulic fluid to an actuator (15) of the propeller;
- a plate (26a, 26b) inclined with respect to the axis of rotation (A) and rotationally secured to the actuating shaft (21), each piston (24) bearing on a surface of the plate (26a, 26b);
wherein the plate of a first of the pumps (20a) comprises a curved intake opening (261a) extending circumferentially with respect to the axis of rotation (A) and configured to allow the circulation of the hydraulic fluid from the cavity (221a) to the cylinders of the first of the pumps (20a) when the plate (26a, 26b) of said pump (20a) is driven in a first direction of rotation, and the plate (26a, 26b) of a second of the pumps (20b) comprises a curved intake opening (261b) extending circumferentially with respect to the axis of rotation (A) and configured to allow the circulation of the hydraulic fluid from the cavity (221b) to the cylinders of the second of the pumps (20b) when the plate (26b) of said pump (20b) is driven in a second direction of rotation opposite to the first direction of rotation.

2. The mechanism as claimed in claim 1 wherein, when the plate (26a) of the first pump (20a) is driven in the second direction of rotation, the intake hole (242) of the cylinders is shut off by the surface of the plate of the first pump (20a) and, when the plate (26b) of the second pump (20b) is driven in the first direction of rotation, the intake hole (242) of the cylinders is shut off by the surface of the plate of the second pump (20b).

3. The pitch change mechanism as claimed in one of claims 1 or 2, wherein the discharge holes (232) of the pumps are adjacent and open into a central area of the pumping assembly (2).

4. The pitch change mechanism as claimed in one of claims 1 to 3, wherein each cylinder further comprises a discharge valve (231) mounted on the discharge hole (232) and configured to block circulation of the hydraulic fluid of the actuator (15) in the direction of the cylinder.

5. The pitch change mechanism as claimed in one of claims 1 to 4, further comprising an annular groove (222a, 222b) formed in the body (22) of each pump, said annular groove (222a, 222b) being in fluid communication with the discharge holes (232) of the cylinders of the corresponding pump.

6. The pitch change mechanism as claimed in claim 5, wherein the actuator (15) of the propeller comprises two chambers, a first of the two chambers being in fluid communication with the annular groove (222a) of the first pump (20a), a second of the two chambers being in fluid communication with the annular groove (222b) of the second pump (20b).

7. The pitch change mechanism as claimed in claim 6, further comprising:
- a first hydraulic valve (153) configured to put the first chamber (151) of the actuator in fluid communication either with the annular groove (222a) of the first pump (20a) when the actuating shaft (A) is driven in the first direction of rotation, or with a hydraulic accumulator (16) when the actuating shaft (A) is driven in the second direction of rotation; and
- a second hydraulic valve (154) configured to put the second chamber (152) of the actuator in fluid communication either with the annular groove (222b) of the second pump (20b) when the actuating shaft (A) is driven in the second direction of rotation or with the hydraulic accumulator (16) when the actuating shaft (A) is driven in the first direction of rotation.

8. The pitch change mechanism as claimed in claim 7, wherein the first hydraulic valve (153) and the second hydraulic valve (154) are each controlled by a pressure at the discharge hole (232) of the first pump (20a) and of the second pump (20b), respectively.

9. The pitch change mechanism as claimed in one of claims 1 to 8, wherein the electric machine (29) is an asynchronous machine.

10. The pitch change mechanism as claimed in one of claims 1 to 9, wherein a pitch of the propeller (13) is controlled by torque control of the electric machine (29).

11. A turbomachine comprising a propeller (13) and a pitch change mechanism as claimed in one of claims 1 to 10 configured to actuate an actuator (15) which is mechanically connected to the propeller (13).

12. An aircraft comprising at least one turbomachine as claimed in claim 11 connected to the aircraft by way of a pylon.
